Europäisches Patentamt

European Patent Office

Office européen des brevets

(11) Veröffentlichungsnummer : **0 017 237**
B1

# EUROPÄISCHE PATENTSCHRIFT

(45) Veröffentlichungstag der Patentschrift :
24.11.82

(21) Anmeldenummer : 80101799.7

(22) Anmeldetag : 03.04.80

(51) Int. Cl.³ : **A 61 J 1/00**, C 08 L 23/28, B 65 D 30/02

(54) **Medizinische Geräte für parenterale Flüssigkeiten.**

(30) Priorität : 10.04.79 DE 2914463

(43) Veröffentlichungstag der Anmeldung :
15.10.80 (Patentblatt 80/21)

(45) Bekanntmachung des Hinweises auf die Patenterteilung : 24.11.82 Patentblatt 82/47

(84) Benannte Vertragsstaaten :
AT BE CH DE FR GB IT LI NL SE

(56) Entgegenhaltungen :
EP A 0 001 788
DE A 2 365 851
DE A 2 547 376
DE A 2 754 120
DE A 2 800 484
DE B 2 343 982
DE B 2 503 182
US A 3 901 232
US A 3 964 482

(73) Patentinhaber : HOECHST AKTIENGESELLSCHAFT
Postfach 80 03 20
D-6230 Frankfurt/Main 80 (DE)

(72) Erfinder : Becker, Udo, Dr.
Schmaedelstrasse 17
D-8000 München 60 (DE)
Erfinder : Busch, Wolfram
Akazienring 38
D-6203 Hochheim am Main (DE)
Erfinder : Fischer, Johann Paul, Dr.
im Kleinfeld 30
D-6240 Königstein/Taunus (DE)
Erfinder : Sommer, Werner
Paul-Lincke-Weg 6
D-6232 Bad Soden am Taunus (DE)

## Medizinische Geräte für parenterale Flüssigkeiten

Es ist bekannt, Gefäße aus weichmacherhaltigem Polyvinylchlorid für das Sammeln, die Aufbewahrung und die Verabreichung parenteraler Flüssigkeiten, z.B. von Blut, Blutplasma, Blutersatzstoffen, Infusionslösungen und andere physiologischen Flüssigkeiten zu verwenden Bekannt ist weiterhin, daß der in solchen Mischungen enthaltene Weichmacher die Gefahr der Migration oder Extraktion in sich birgt. Darauf wird z.B. in der DE-B-25 03 182 hingewiesen. Es ist außerdem bekannt, daß weichmacherhaltiges Polyvinylchlorid, sowie das ebenfalls sehr häufig verwendete Silikon-Material und konventionell verarbeitete Polyolefine das damit in Berührung kommende Blut oder die Blutbestandteile schädigen, indem verschiedene zelluläre und plasmatische Faktoren des Gerinnungssystems aktiviert oder adsorbiert werden. Die daraus hergestellten medizinischen Geräte sind daher nur bedingt einsatzfähig. Diese bedingte Einsatzfähigkeit gilt auch für medizinische Geräte, insbesondere Blutbeutel aus Polyurethan aufgrund der ziemlich hohen Durchlässigkeit für Wasserdampf und Luft. Außerdem sind manche medizinischen Geräte wegen der relativ schwierigen Verarbeitbarkeit von Polyurethan nur in aufwendiger Weise herstellbar.

Aus der DE-A-2 547 378 (insbesondere Seite 3) und aus der US-A-3 901 232 (insbesondere Spalte 8, Zeilen 5 bis 36) ist weiterhin die Verwendung von chloriertem Polyäthylen zur Herstellung von Behältern bekannt, die in Körperflüssigkeiten, mit denen diese Behälter in Berührung kommen, unlöslich sind. Die Blutverträglichkeit des hierin beschriebenen chlorierten Polyäthylens bzw. der daraus hergestellten Geräte ist jedoch nicht ausreichend.

Gegenstand der älteren Europäischen Patentanmeldung 78 10 1183.8 (EP-A-0001788) sind schließlich thermoplastische Massen zur Herstellung von medizinischen Geräten für parenterale Flüssigkeiten sowie die medizinischen Geräte selbst, wobei die thermoplastischen Massen aus 50 bis 99,5 Gewichsteilen chloriertem Polyolefin mit einem Chlorgehalt von 15 bis 45 Gew.-% und einem mittleren Molekulargewicht von 30 000 bis 300 000 und aus 0,5 bis 50 Gewichsteilen Polymeren von Acryl- und/oder Methacrylsäureestern bestehen. Als Stabilisatoren werden physiologisch einwandfreie Substanzen, wie fettsaure Salze von Calcium, Magnesium, Aluminium und Zink, weiterhin organische Phosphite, aliphatische Epoxide, mehrwertige Alkohole und phenolische Antioxydantien verwendet.

Aufgabe der vorliegenden Erfindung war es daher, ein medizinisches Gerät aus einem Polymeren bereitzustellen, welches die bekannten Nachteile nicht besitzt und das insbesondere eine erhöhte Verträglichkeit mit Blut besitzt.

Diese Aufgabe wird erfindungsgemäß dadurch gelöst, daß für das medizinische Gerät ein Polymere eingesetzt wird, das aus Chlorpolyolefin besteht oder dieses enthält und das als Zusatzstoff Glycerinester aliphatischer Fettsäuren enthält.

Die Erfindung betrifft daher ein medizinisches Gerät für parenterale Flüssigkeiten, bei dem zumindestens diejenigen Oberflächen, die mit parenteralen Flüssigkeiten in Berührung kommen, aus einem Polymeren mit einem Gehalt and chloriertem Polyolefin von mindestens 50 Gewichsteilen pro 100 Gewichsteilen Gesamtpolymeres — ausgenommen einem Polymeren mit einem Gehalt von 50 bis 95,5 Gewichsteilen chloriertem Polyolefin mit einem mittleren Molekulargewicht von 30 000 bis 300 000 und 0,5 bis 50 Gewichsteilen Polymeren von Acryl- und/oder Methacrylsäureestern — bestehen, dadurch gekennzeichnet, daß der Chlorgehalt des chlorierten Polyolefins 15 bis 45 Gewichtsprozent und sein mittleres Molekulargewicht $\bar{M}_w$ 20 000 bis 2 000 000 (Gewichtsmittelwert, berechnet aus dem Chlorgehalt und dem gelchromatographisch bestimmten Molekulargewicht des Ausgangspolyäthylens ; geeicht mit Polyäthylenstandards des National Bureau of Standards, Washington DC) beträgt und daß das Polymere pro 100 Gewichsteile 0,01 bis 10 Gewichsteile Glycerinester aliphatischer Fettsäuren enthält.

Als chlorierte Polyolefine, die erfindungsgemäß bevorzugt für die medizinischen Geräte eingesetzt werden, eignen sich die bekannten Chlorierungsprodukte von Polyolefinen, insbesondere von Polyäthylen, Polypropylen und Mischpolymerisaten von Äthylen und Propylen, vor allem Niederdruckpolyäthylen und Mischpolymerisaten des Äthylens mit geringen Anteilen von z.B. 1-5 Mol-% Propen, Buten-(1) oder Hexen-(1). Das mittlere Molekulargewicht $\bar{M}_w$ dieser chlorierten Polyolefine beträgt vorzugsweise 70 000 bis 400 000 und der Chlorgehalt 25 bis 40 Gew.-%. Da die Wasserdampfdurchlässigkeit der Massen von der Kristallinität der Chlor-Polyolefine mit beeinflußt wird, werden vorzugsweise chlorierte Polyolefine mit einem Restkristallgehalt von 0-20, besonders bevorzugt 0-15 %, bestimmt mittels Differentialthermoanalyse, eingesetzt. Es können auch Gemische verschiedener Chlorpolyolefine verwendet werden.

Die für die Chlorierung eingesetzten Polyolefine haben zweckmäßigerweise eine reduzierte spezifische Viskosität (RSV), bestimmt an einer 0,1 %igen Lösung in Dekahydronaphthalin bei 135 °C nach ISO/R 1191, von 0,5 bis 35, vorzugsweise von 1,2 bis 5 dl/g. Werden für die Chlorierung Polyolefine mit höherem RSV-Wert und damit höherem Molekulargewicht verwendet, erhält man thermoplastische Massen, die sich nur schwierig verarbeiten lassen, während Polyolefine mit niedrigerem RSV-Wert Massen mit schlechteren mechanischen Eigenschaften ergeben. Grundsätzlich ist jedoch die Wirkung der Kombination von Chlorpolyolefin bzw. des dieses enthaltende Kunststoffmaterials mit Glycerinestern aliphatischer Fettsäuren auch für niedrigere und höhere Molekulargewichte gegeben, wobei jedoch z.B. für hochmolekulare Materialien von der thermoplastischen Verarbeitung auf andere Verarbeitungsmethoden wie z.B. Sintern übergegangen werden muß. Das mittlere Molekulargewicht $\bar{M}_w$ liegt im

allgemeinen zwischen 15 000 und 1 500 000, vorzugsweise 50 000 bis 300 000 und die Verteilungsbreite $\overline{M}_w/M_n$ (Gewichtsmittelwert/Zahlenmittelwert) zwischen 2 und 20, vorzugsweise 4 und 15.

Die Chlorierung der Polyolefine erfolgt nach den hierfür bekannten Verfahren ; vorzugsweise wird sie in wäßriger Suspension z.B. nach dem Verfahren der DE-B-14 20 415 oder in verdünnter Salzsäure in Gegenwart von Agglomerationshemmern, wie in der DE-A-2 260 525 beschrieben, durchgeführt.

Das erfindungsgemäß zu verwendende Polymere kann neben den erforderlichen mindestens 50 Gewichtsteilen an chloriertem Polyolefin noch andere Polymere oder Copolymere beigemischt enthalten, deren Molekulargewicht zweckmäßigerweise in den oben für Chlorpolyolefin angegebenen Bereichen liegt.

Dies können die bekannten, mit Chlorpolyolefinen mischbaren Polymeren- mit Ausnahme von Polyacryl- oder Polymethacrylsäureestern- oder Copolymeren sein, sofern letztere nicht überwiegend aus Acryl- und/oder Methacrylsäureestern bestehen und kein Vinylchlorid als Comonomers enthalten. Beispiele für derartige Polymere sind Polyvinylchlorid, Polyolefine wie Polyäthylen oder Polypropylen, Polyvinylacetat, Polyacrylnitril.

Die Copolymeren enthalten vorzugsweise Vinylchlorid, Olefine, insbesondere Äthylen oder Propylen, Diolefine wie Butadien, Isopren oder Äthylidennorbornen, Vinylester wie Vinylacetat oder Acrylnitril als Monomerenbausteine. Als Beispiele für Copolymere seien genannt : Vinylchlorid-Copolymere wie Vinylchlorid/Äthylen- oder Vinylchlorid/Vinylacetat-Copolymere, Äthylen/Vinylacetat-Copolymere, Äthylen/Propylen-Copolymere (APK), Äthylen/Propylen/Diolefin -Terpolymere (APTK), Acrylnitril/Butadien-Copolymere (NBR-Kautschuk), Acrylnitril/Butadien/Styrol-Terpolymere (ABS-Kautschuk).

Im Falle des Einsatzes eines Polymeren aus Chlorpolyolefin und einem anderen Polymeren kann die Herstellung durch Mischen der betreffenden Polymeren, vorzugsweise nach dem Schmelzmischverfahren erfolgen. Eine bessere Homogenisierung und damit in der Regel auch eine bessere Transparenz erhält man durch die Polymerisation des jeweiligen Monomeren oder Monomerengemisches in Gegenwart des chlorierten Polyolefins unter den bekannten Polymerisationsbedingungen, wodurch zu einem gewissen Grade auch eine Pfropfung des oder der Monomeren auf dem chlorierten Polyolefin stattfindet.

Der Einsatz verschiedener Gehalte und Zusammensetzungen der genannten Polymeren richtet sich in bekannter Weise je nach dem Einsatzgebiet der medizinischen Geräte auf die jeweils zu optimierenden Gebrauchseigenschaften wie z.B. mechanischer Haltbarkeit, Flexibilität, Transparenz, Gaspermeation oder Sterilisierbarkeit.

Im Rahmen dieser variierbaren Gebrauchseigenschaften wird die Verträglichkeit des Materials, insbesondere der dem Blut oder den Blutbestandteilen zugewandten Oberfläche erfindungsgemäß durch den Einsatz von Glycerinestern aliphatischer Fettsäuren als Zusatzstoffe erreicht, die vorzugsweise in Mengen von 0,5 bis 5 Gewichtsteilen pro 100 Gewichtsteilen Polymeres verwendet werden.

Diese Glycerinester können als Säurekomponente gesättigte oder ungesättigte Fettsäuren mit 5 bis 30 C-Atomen enthalten und stellen, vorzugsweise in der Natur vorkommende Fette oder Öle dar, wie z.B. Sojaöl oder Epoxidationsprodukte solcher Fette und Öle mit bis zu 10 Gew.-%, vorzugsweise 2 bis 7 Gew.-% Epoxid-Sauerstoffgehalt, wie z.B. epoxidiertes Sojaöl.

Diese Glycerinester werden in reiner Form oder in Form von Gemischen, vorzugsweise in der natürlich vorkommenden Mischung, im Rahmen eines Schmelzmischprozeßes vor der Verarbeitung in das Kunststoffmaterial eingemischt oder auch erst nach dem Verarbeitungsschritt auf die, der parenteralen Flüssigkeit zugewandten Seite des jeweiligen Gerätes aufgebracht.

Im letzteren Fall können schon kleine Mengen wie 0,01 Gewichtsteile des Glycerinesters ausreichen, während beim Einarbeiten nach einem Schmelzmischprozeß, insbesondere bei der Granulierung des Polymeren, im allgemeinen 0,1-10 Gewichtsteile vorzugsweise 0,5 bis 5 Gewichtsteile dieser Glycerinester aliphatischer Fettsäuren erforderlich sind.

Wesentlich ist demnach also, daß zumindestens die Oberflächen des medizinischen Gerätes, die mit der parenteralen Flüssigkeit in Kontakt kommen, aus dem erfindungsgemäß eingesetzten Material, d.h. dem speziellen Polymeren, welches den speziellen Zusatzstoff enthält, bestehen.

Unter « Oberfläche » sei hier vorzugsweise der Bereich bis zu einer Tiefe von bis zu ca. 5 µm, vorzugsweise 1 µm, verstanden, wenngleich für den vorliegenden Anwendungszweck im allgemeinen bereits schon die erfindungsgemäße athrombogene Ausrüstung bis zu einer Oberflächentiefe von wenigen Angström ausreicht.

Neben dem obigen erfindungsgemäßen Zusatzstoff, der auch als Gleitmittel und Stabilisator wirkt, können zusätzlich noch weitere, vorzugsweise physiologisch unbedenkliche Stabilisatoren, wie etwa fettsaure Salze von Calcium, Magnesium, Aluminium und Zink, beispielsweise Calcium-Zink-Stearat oder Calcium-Aluminium-Stearat, organische Phosphite und phenolische Antioxydantien in dem Polymermaterial enthalten sein. Außerdem kommen hier auch noch die üblichen Lichtstabilisatoren, Gleitmittel, Pigmente und Füllstoffe, z.B. Bariumsulfat als Kontrastmittel für röntgenographische Zwecke in Frage. Diese Zusätze können während der Herstellung der thermoplastischen Masse oder nachträglich zugegeben werden.

Unter medizinischen Geräten seien hier vor allem solche Geräte oder Geräteteile verstanden, die mit parenteralen Flüssigkeiten direkt oder indirekt in Berührung kommen, wie z.B. Blutbeutel, flexible Behälter für Infusionslösungen, Infusionsschläuche, Absaugschläuche, Blutfilter, Kanülen, Teile der künstlichen Niere oder der Herzlungenmaschine. Parenterale Flüssigkeiten sind dabei sowohl Blut, Blutserum und Blutbestandteile, als auch alle anderen injizierbaren Lösungen für medizinische Zwecke wie Lösungen von Blutersatzmitteln. Daneben soll der Begriff « medizinische Geräte » auch Implantationsgeräte wie z.B. Arterio- venöser Shunt, Arterienprothesen, Herz-Bypass-Pumpen, Herz-Klappen, Herzschrittmacher, Katheter oder künstliche Herzen umfassen.

Die Herstellung dieser Geräte erfolgt nach den üblichen Verfahren wie z.B. Pressen, Spritzgießen, Extrudieren oder Blasformen und auf den üblichen Verarbeitungsmaschinen, wie Extrudern oder Kalandern.

Zumeist ist die gute mechanische Festigkeit dieser Geräte für die vorliegenden Anwendungszwecke ausreichend. In manchen Fällen kann es jedoch zweckmäßig sein, die mechanische Festigkeit durch Einarbeiten von Stützgeweben aus anorganischem oder organischem Material, wie Glasfasern oder Kunststoff-Fasern, beispielsweise aus Polyester oder Polyamid, zu erhöhen. Außerdem ist es zu diesem Zwecke auch möglich, Verbundfolien einzusetzen, bei denen die innere Folie, die mit den parenteralen Flüssigkeiten in Berührung kommt, aus den erfindungsgemäß eingesetzten Formmassen besteht (also gewissermaßen als Futter wirkt) und die äußere Folie aus mechanisch besonders starkem, und ggf. gleichfalls möglichst transparentem oder gasdichtem Material aufgebaut ist.

Für die oben erwähnten medizinischen Geräte wurden bisher insbesondere weichmacherhaltiges Polyvinylchlorid, Silikone oder Polyäthylen verwendet, deren Verträglichkeit mit Blut und wichtigen Blutbestandteilen durch die erfindungsgemäße Anwendung der beschriebenen Materialien übertroffen wird. Als Blutverträglichkeit (Athrombogenität) wird dabei die Eigenschaft eines Materials bezeichnet, sich gegenüber den im Blut enthaltenen Gerinnungssystemen neutral zu verhalten, d.h. keine Gerinnsel (Thromben) hervorzurufen. Körperfremdes Material beeinflußt in aller Regel sowohl die zellulären als auch die plasmatischen Blutbestandteile ; von besonderer Bedeutung ist hierbei die Einwirkung auf die Gerinnungsfaktoren II, IX, XI und XII.

Die Gerinnungsfaktoren werden üblicherweise analog zu der Methode von Hardisty und Macpherson bestimmt (vgl. Thromb. Diath. Haemorrh., Band 7 (1962), Seite 215).

Die Blutverträglichkeit des erfindungsgemäß eingesetzten Polymeren und der hieraus hergestellten erfindungsgemäßen medizinischen Geräte wird mit Hilfe einer Reihe von Untersuchungen ermittelt, deren Ergebnisse zusammengenommen eine Aussage über die Blutverträglichkeit ermöglichen. Das zu prüfende Polymere wird als flexibler Schlauch (rotierender Schlauchtest) eingesetzt. Bei diesem test wird menschliches Vollblut verwendet, das mit 10 Vol.-% einer 3,8 gewichtsprozentigen wäßrigen Natriumcitratlösung versetzt wurde. Das Polymere wird in Form eines Schlauches mit einer Länge von 75 cm und einem Innendurchmesser von 4 mm eingesetzt. In den Schlauch werden 10 ml Blut gefüllt, und dann werden die Enden des Schlauches dicht miteinander verbunden. Der Schlauch wird kreisförmig gebogen und auf einem Drehteller befestigt, der eine Neigung von 75 Grad aufweist. Der Drehteller wird bei einer Umgebungstemperatur von 37 °C zwei Stunden lang mit einer Umdrehungszahl von 15 Upm gedreht. Nach Beendigung dieses rotierenden Schlauchtests wird die Zahl der im Testblut enthaltenen Blutplättchen mit einem handelsüblichen Teilchenzähler (Hersteller : Coulter Electronics Ltd.) ermittelt und mit der Anzahl der Blutplättchen im Ausgangsmaterial verglichen. Dies ergibt den Wert der Plättchenretention (PR) in Tabelle 1. Anschließend werden die zellulären Bestandteile des Blutes durch Zentrifugieren (3 000 g, 20 min) entfernt, und an dem resultierenden Blutplasma werden die folgenden Parameter bestimmt :

a) Plättchenfaktor 3 (PF 3) (nach Hardisty und Hutton, Brit. J. Haemat., Band 11 (1965), Seite 258).

b) Plättchenfaktor 4 (PF 4) (nach Harada und Zucker, Thromb. Diath. Haemorrh., Band 25 (1971), Seite 41).

c) Rekalzifizierungszeit (RCZ) : 0,2 ml des Plasmas werden bei einer Temperatur von 37 °C mit 0,2 ml einer wäßrigen Calciumchlorid-Lösung (0,025 molar) versetzt, und die Zeit bis zur Gerinnung wird mit einem handelsüblichen automatischen Koagulometer bestimmt.

d) Partielle Thromboplastinzeit (PTT) : Zu 0,1 ml des Plasmas wird bei einer Temperatur von 37 °C 0,1 ml eines Thromboplastinreagenzes (Hersteller : Behringwerke AG) pipettiert und 2 min lang inkubiert. Dann wird 0,1 ml einer wäßrigen Calciumchloridlösung (0,025 molar), die auf 37 °C vorgewärmt ist, zugefügt, und die Zeit bis zur Gerinnung wird mit einem handelsüblichen automatischen Koagulometer bestimmt.

e) Gerinnungsfaktoren II, IX, XI und XII.

Alle Meßwerte werden gemäß Tabelle 1 auf den Normwert 1 der jeweiligen Ausgangswerte des unbehandelten Blutes oder plasmas umgerechnet. Die relativen Abweichungen von den Ausgangswerten werden addiert, hierbei die Plättchenretention (PR) und die partielle Thromboplastinzeit (PTT) doppelgewichtet und durch die Zahl der Meßparameter geteilt. Der daraus erhaltene Wert (= Maßzahl) ist, in Prozent ausgedrückt, ein Maß für den Einfluß des Kunststoff-Materials auf das Blut, wobei der Einfluß umso geringer ist, je kleiner der Wert ist. Man erkennt in Tabelle 1, daß gemäß Beispiel 1 durch die erfindungsgemäße Kombination von chloriertem Polyäthylen mit epoxidiertem Sojaöl die so hergestellten Schläuche mit einer Blutverträglichkeit-Maßzahl von 7,7 % über die Summe der ermittelten Parameter besser blutverträglich sind als das unmodifizierte chlorierte Polyäthylen (Vergleichsbeispiel A) (Maßzahl 24,1 %), marktübliche medical-grade Polyvinylchlorid-Schläuche mit Weichmacher und epoxydiertem Sojaöl (Vergleichsbeispiel H) (Maßzahl 18,3 %), marktüblicher medical-grade Silikon-Schlauch für Bluttransfusionen (Vergleichsbeispiel G) (Maßzahl 25,9 %) oder ein Polyäthylen-(Vergleichsbeispiel B) (Maßzahl 27,7 %) oder Äthylen/Propylen/Äthylidennorbornen-Terpolymer-Schlauch (Vergleichsbeispiel F) (Maßzahl 24,3 %).

### Beispiel 1

100 Gewichsteile eines feinkörnigen chlorierten Polyäthylens mit einem Chlorgehalt von 34 Gew.-%, das aus einem Polyäthylen der Molekulargewichte : Gewichtsmittelwert 160 000 und Zahlenmittelwert 31 000 durch Chlorierung hergestellt wurde (Molekulargewichtsbestimmungen am Ausgangspolyäthylen mittels Gelpermationschromatographie bei 135 °C in 1,2,4-Trichlorbenzol, geeicht mit Polyäthylenstandards des National Bureau of Standards, Washington DC) werden in einem Mischerrührwerk mit 2 Gewichtsteilen eines Stabilisatorsystems aus Ca-stearat und Zinkstearat, mit 0,15 Gewichtsteilen eines Polyäthylenwachses als Gleitmittel und 5 Gewichtsteilen epoxidiertes Sojaöl mit 6 % Epoxid-Sauerstoff gemischt und die Mischung über 20 Stunden leicht weiter gerührt. Die Mischung wird in einem Extruder mit einem 140-170 °C-Temperaturprogramm vom Einzug bis zur Düse aufgeschmolzen und gemischt, der sich abkühlende Extrusionsstrang zu Granulat zerhackt. Mit diesem Granulat wird auf einem Einschneckenextruder mit einer 30 mm-Schnecke mit demselben Temperaturprogram (140-170 °C) ein Schlauch des Innendurchmessers 4 mm und der Wandstärke 0,8 mm extrudiert und der Schlauch in Stücken von 75 cm ohne jede weitere Maßnahme dem oben beschriebenen Blutverträglichkeitstest « rotierendes Schlauchsystem » zugeführt. Die Blutverträglichkeitsmaßzahl beträgt gemäß Tabelle 1 bei 10 Ausführungen dieses Beispiels 1 mit insgesamt 25 Blutgerinnungstesten 7,71 ± 2,17 % Standardabweichung bzw. 0,43 % mittlerer Fehler dieses Mittelwerts.

### Beispiel 2

Unter sonst konstanten Bedingungen wie in Beispiel 1 werden statt 5 Gewichtsteilen epoxidiertes Sojaöl 2,5 Gewichtsteile eingesetzt. Die Maßzahl der Blutverträglichkeit betrug 9,7 %, der Wiederholungswert liegt bei 10,5 %.

### Beispiel 3

Unter sonst konstanten Bedingungen wie in Beispiel 1 werden statt 5 Gewichtsteilen epoxidiertes Sojaöl 1,25 Gewichtsteile eingesetzt. Maßzahl der Blutverträglichkeit : 5,2 % ; Wiederholungswert : 8,7 %.

### Beispiel 4

Unter sonst gleichen Bedingungen wie Beispiel 1 werden 100 Gewichtsteile eines chlorierten Polyäthylens mit einem Chlorgehalt von 39 Gew.-% eingesetzt, das aus einem Polyäthylen mit einem $\overline{M}_w$-Wert von 57 000 und einem $\overline{M}_n$-Wert von 13 000 durch Chlorierung gewonnen wurde. Maßzahl der Blutverträglichkeit : 4,0 % ; Wiederholungswert : 8,3 %.

### Beispiel 5

Unter sonst gleichen Bedingungen wie Beispiel 1 werden statt des dort als Ausgangsmaterial eingesetzten Polyäthylens ein solches des $\overline{M}_w/\overline{M}_n$-Verhältnisses von 220 000/30 000 der Chlorierung zu einem Chlorgehalt von 34 Gew.-% zugrunde gelegt. Maßzahl der Blutverträglichkeit : 8,3 % ; Wiederholungswert : 11,5 %.

### Beispiel 6

Unter sonst gleichen Bedingungen wie Beispiel 1 werden 60 Gewichtsteile eines chlorierten Polyäthylens mit einem Chlorgehalt von 34 Gew.-% ($\overline{M}_w/\overline{M}_n$ des Polyäthylens = 160 000/31 000) und 40 Gewichtsteile eines chlorierten Polyäthylens mit einem Chlorgehalt von 39 Gew.% ($\overline{M}_w/\overline{M}_n$ des Polyäthylens = 57 000/13 000) vorgelegt und mit 1 Gewichtsteil epoxidiertem Sojaöl kombiniert. Maßzahl der Blutverträglichkeit : 7,4 % ; Wiederholungswerte : 7,9 % und 6,0 %.

### Vergleichsbeispiel A

Unter sonst gleichen Bedingungen wie Beispiel 1 werden anstelle von 5 Gewichtsteilen epoxidiertes Sojaöl 5 Gewichtsteile eines epoxidierten Polyäthylenwachses mit im Mittel 30 C-Atomen und 2,6 Gew.-% Epoxidsauerstoff eingesetzt (Schmelzpunkt 80 °C).

Die Maßzahl der Blutverträglichkeit als Mittelwert von 4 verschiedenen Schlauchextrusionen und 16 Blutverträglichkeitseinzelmessungen (s. Tabelle 1) betrug 24,1 %, bei einer Standarddabweichung von ± 9,4 % bzw. einem mittleren Fehler von 2,35 % dieses Mittelwertes.

## Beispiel 7

Der ohne epoxidiertes Sojaöl gemäß Vergleichsbeispiel A erhaltene Schlauch wird mit epoxidiertem Sojaöl gefüllt, 24 h in Ruhe gelagert, das epoxidierte Sojaöl ablaufen gelassen und unter Stickstoff-Strom getrocknet. Sojaöl-Gehalt : ca. 0,1 Gew.% auf den Gesamtschlauch bezogen. Maßzahl der Blutverträglichkeit aus 3 Messungen : 12,1 ± 2,1 %.

## Beispiel 8

Der ohne epoxidiertes Sojaöl gemäß Vergleichsbeispiel A erhaltene Schlauch wird mit natürlichem (nicht epoxidiertem) Sojaöl gemäß Beispiel 7 behandelt. Maßzahl der Blutverträglichkeit : 8,7 %.

## Vergleichsbeispiel B

Unter sonst gleichen Bedingungen wie Beispiel 1 werden 100 Gewichtsteile eines bis zu 30 Gew.-% Chlorgehalt chlorierten Polyäthylens ($\overline{M}_w/\overline{M}_n$ des Polyäthylens = 57 000 : 13 000) mit 1,75 Gew.-% des Stabilisatorsystems Ca-stearat + Zn-stearat, 1,75 Gew.-% des epoxidierten Polyäthylenwachses, 0,25 Gew.-% eines nicht epoxidierten Polyäthylenwachses und 0,15 Gew.-% Oxystearinsäure gemischt, mit Hilfe eines Schmelzmischprozeßes granuliert und zum Schlauch extrudiert. Maßzahl der Blutverträglichkeit aus 6 Messungen : 27,9 ± 4,2.

## Beispiel 9

Der ohne epoxidiertes Sojaöl gemäß Vergleichsbeispiel B erhaltene Schlauch wird mit epoxidiertem Sojaöl gefüllt, 24 h gelagert, das epoxidierte Sojaöl ablaufen gelassen, mit Hexan nachgewaschen, unter Stickstoffstrom und anschließend im Vakuumtrockenschrank getrocknet. Maßzahl der Blutverträglichkeit : 10,4 %/13,5 %.

## Vergleichsbeispiel C

Unter sonst gleichen Bedingungen wie Beispiel 1 werden 100 Gewichtsteile eines zu 34 Gew.-% Chlorgehalt chlorierten Polyäthylens ($\overline{M}_w/\overline{M}_n$ des Polyäthylens = 160 000 : 31 000) mit 0,5 Gew.-% Calciumstearat, 1,5 Gew.-% Barium-Cadmium-Laurat und 0,5 Gew.-% Trisnonylphosphit vermischt, granuliert und zum Schlauch extrudiert. Maßzahl der Blutverträglichkeit : 46,3 ± 4,7 % (aus 4 Messungen).

## Vergleichsbeispiel D

Der gemäß Beispiel 1 erfindungsgemäß hergestellte Schlauch mit der Blutverträglichkeitsmaßzahl 7,71 ± 0,43 % aus 25 Einzelmessungen wird auf der Schlauchinnenseite mit einer Mischung aus 25 % Toluol und 75 % Methanol (als Lösungsmittel für das im Schlauch enthaltene epoxidierte Sojaöl) extrahiert, das Toluol mit Methanol ausgewaschen u. der Schlauch getrocknet. Aus der Gewichtsabnahme ergibt sich, daß etwa die Hälfte des epoxidierten Sojaöls in 24 h extrahiert wurde.
Maßzahl der Blutverträglichkeit nach der oberflächlichen Extraktion des epoxidierten Sojaöls : 20,4 ± 7,2 %.

## Vergleichsbeispiel E

Ein Schlauch gleicher Dimension wie in Beispiel 1 wird extrudiert aus Hochdruck-Polyäthylen ($\overline{M}_w/\overline{M}_n$ = 72 000 : 18 000) ; Maßzahl der Blutverträglichkeit : 27,7 ± 3,4 % (aus 6 Messungen).

## Vergleichsbeispiel F

Ein Schlauch gleicher Dimension wie in Beispiel 1 wird aus Äthylen/Propylen/Äthylidennorbornen-Ter-Kautschuk der Zusammensetzung 71 Gew.-% Äthylen, 24 Gew.-% Propylen und 5 Gew.-% Äthylidennorbornen extrudiert. Maßzahl für die Blutverträglichkeit gemäß Tabelle 1 aus 17 Einzelmessungen : 24,3 ± 1,7 %.

## Vergleichsbeispiel G

Ein Schlauch desselben Innendurchmessers von 4 mm wie in Beispiel 1, jedoch mit 1 mm Wandstärke, aus medical-grade-Silikon für biomedizinische Anwendungen, wie z.B. als Bluttransfusionsschlauch auf dem Markt, wird vergleichsweise gemessen :
Blutverträglichkeitsmaßzahl gemäß Tabelle 1 aus 44 Einzelmessungen : 25,0 ± 1,1 %.

## Vergleichsbeispiel H

Ein Schlauch von 4 mm Innendurchmesser und 1 mm Wandstärke, der aus medical-grade-PVC mit 39 Gew.-% Dioctylphthalat als Weichmacher und 5 Gew.-% epoxydiertem Sojaöl für biomedizinische Zwecke z.B. als Bluttransfusionsschlauch am Markt angeboten wird, wird getestet. Die Maßzahl der Blutverträglichkeit beträgt bei 45 Einzelmessungen : 18,3 ± 1,2 %.

## Tabelle 1

Mittlere Faktorveränderungen bei der Ermittlung der Blutverträglichkeitsmasszahlen nach dem *in-vitro-* « rotierenden Schlauchsystem »

### Vergleichsbeispiele

| Faktoren | Beispiel 1 | A | E | F | G | H |
|---|---|---|---|---|---|---|
| | 25* | 16* | 9* | 17* | 44* | 45* |
| (PR) X 2 | 0,946 ± 0,011 | 0,684 ± 0,036 | 0,519 ± 0,049 | 0,622 ± 0,032 | 0,634 ± 0,022 | 0,849 ± 0,048 |
| PF 3 | 1,060 ± 0,016 | 1,129 ± 0,017 | 1,100 ± 0,182 | 1,159 ± 0,035 | 1,169 ± 0,018 | 1,252 ± 0,027 |
| PF 4 | 1,125 ± 0,035 | 2,156 ± 0,191 | 2,206 ± 0,256 | 1,903 ± 0,176 | 2,133 ± 0,103 | 1,729 ± 0,115 |
| F XII | 1,025 ± 0,016 | 1,074 ± 0,028 | 1,017 = 0,038 | 1,042 ± 0,023 | 0,947 ± 0,013 | 0,959 ± 0,012 |
| F XI | 1,012 ± 0,017 | 1,061 ± 0,030 | 1,060 ± 0,028 | 0,957 ± 0,042 | 0,958 ± 0,013 | 0,954 ± 0,024 |
| F IX | 0,991 ± 0,015 | 1,068 ± 0,051 | 1,013 ± 0,022 | 1,025 ± 0,035 | 0,908 ± 0,016 | 0,940 ± 0,016 |
| F II | 0,905 ± 0,012 | 0,926 ± 0,024 | 0,848 ± 0,031 | 0,888 ± 0,026 | 0,857 ± 0,002 | 0,853 ± 0,015 |
| RCZ | 0,957 ± 0,024 | 0,911 ± 0,037 | 0,824 ± 0,042 | 0,855 ± 0,037 | 0,871 ± 0,020 | 0,822 ± 0,031 |
| (PTT) X 2 | 1,066 ± 0,004 | 1,074 ± 0,008 | 1,084 ± 0,007 | 1,060 ± 0,037 | 1,112 ± 0,008 | 1,031 ± 0,056 |
| Masszahl (%) | 7,71 ± 0,43 | 24,1 ± 2,35 | 27,7 ± 3,4 | 24,3 ± 1,7 | 25,9 ± 1,1 | 18,3 ± 1,2 |

\* Zahl der jeweiligen Teste

## Ansprüche

1. Medizinisches Gerät für parenterale Flüssigkeiten, bei dem zumindest diejenigen Oberflächen, die mit den parenteralen Flüssigkeiten in Berührung kommen, aus einem Polymeren mit einem Gehalt an chloriertem Polyolefin von mindestens 50 Gewichtsteilen Gesamtpolymeres — ausgenommen einem Polymeren mit einem Gehalt von 50 bis 99,5 Gewichtsteilen chloriertem Polyolefin mit einem mittleren Molekulargewicht von 30 000 bis 300 000 und 0,5 bis 50 Gewichtsteilen Polymeren von Acryl- und/oder Methacrylsäureestern — bestehen, dadurch gekennzeichnet, daß der Chlorgehalt des chlorierten Polyolefins 15 bis 45 Gewichtsprozent und sein mittleres Molekulargewicht $\overline{M}_w$ (Gewichtsmittelwert) 20 000 bis 2 000 000 beträgt und daß das Polymere pro 100 Gewichtsteile 0,01 bis 10 Gewichtsteile Glycerinester aliphatischer Fettsäuren enthält.

2. Medizinisches Gerät nach Anspruch 1, dadurch gekennzeichnet, daß der Glycerinester aliphatischer Fettsäuren natürlich vorkommendes Fett oder Öl oder deren Epoxidationsprodukte ist.

3. Medizinisches Gerät nach Anspruch 1 und 2, dadurch gekennzeichnet, daß der Glycerinester aliphatischer Fettsäuren epoxydiertes Sojaöl ist.

4. Medizinisches Gerät nach Anspruch 1 bis 3, dadurch gekennzeichnet, daß das Polymere ein chloriertes Polyäthylen mit einer Restkristallinität von 0 bis 15 % ist.

5. Medizinisches Gerät nach Anspruch 1 bis 4, dadurch gekennzeichnet, daß es die Form eines Beutels oder Schlauches besitzt.

**Claims**

1. Medical apparatus for parenteral liquids wherein at least the surfaces coming into contact with said liquids are made from a polymer containing at least 50 parts by weight of chlorinated polyolefin for 100 parts by weight of total polymer — with the exception of a polymer consisting of 50 to 95.5 parts by weight of chlorinated polyolefin having an average molecular weight of from 30,000 to 300,000 and 0.5 to 50 parts by weight of polymers of acrylic and/or methacrylic acid esters — characterized by the chlorinated polyolefin having a chlorine content of 15 to 45 % by weight and an average molecular weight $\bar{M}_w$ (weight average) of 20,000 to 2,000,000 and the polymer containing 0.01 to 10 parts by weight of glycerol esters of aliphatic fatty acids for 100 parts by weight of polymer.

2. Medical apparatus as claimed in claim 1, wherein the glycerol ester of aliphatic fatty acids is a fat or oil occurring in nature or the oxidation products thereof.

3. Medical apparatus as claimed in claims 1 and 2, wherein the glycerol ester of aliphatic fatty acids is epoxidized soybean oil.

4. Medical apparatus as claimed in claims 1 to 3, wherein the polymer is a chlorinated polyethylene having a residual crystallinity of 0 to 15 %.

5. Medical apparatus as claimed in claims 1 to 4 having the shape of a bag or tube.

**Revendications**

1. Appareil médical pour liquides parentéraux dans lequel au moins celles des surfaces qui entrent en contact avec les liquides parentéraux sont constituées d'un polymère ayant une teneur en polyoléfine chlorée d'au moins 50 parties en poids pour 100 parties en poids du polymère total (à l'exception d'un polymère ayant une teneur de 50 à 99,5 parties en poids d'une polyoléfine chlorée d'une masse moléculaire moyenne de 30 000 à 300 000 et de 0,5 à 50 parties en poids de polymères d'esters acryliques et/ou d'esters méthacryliques), appareil caractérisé en ce que la teneur en chlore de la polyoléfine chlorée est de 15 à 45 % en poids et sa masse moléculaire moyenne en poids $\bar{M}_p$ est comprise entre 20 000 et 2 000 000 et en ce que le polymère contient, pour 100 parties en poids, de 0,01 à 10 parties en poids d'esters dérivant du glycérol et d'acides gras aliphatiques.

2. Appareil médical selon la revendication 1, caractérisé en ce que l'ester dérivant du glycérol et d'un acide gras aliphatique est une graisse ou une huile naturelle ou l'un de leurs produits d'époxydation.

3. Appareil médical selon l'une des revendications 1 et 2, caractérisé en ce que l'ester dérivant du glycérol et d'un acide gras aliphatique est une huile de soja époxydée.

4. Appareil médical selon l'une quelconque des revendications 1 à 3, caractérisé en ce que le polymère est un polyéthylène chloré ayant une cristallinité résiduelle de 0 à 15 %.

5. Appareil médical selon l'une quelconque des revendications 1 à 4, caractérisé en ce qu'il a la forme d'un sachet ou d'un tuyau.